(19) Europäisches Patentamt
European Patent Office
Office européen des brevets

(11) **EP 2 150 795 B1**

(12) **FASCICULE DE BREVET EUROPEEN**

(45) Date de publication et mention de la délivrance du brevet:
**05.06.2013 Bulletin 2013/23**

(21) Numéro de dépôt: **08805704.7**

(22) Date de dépôt: **24.04.2008**

(51) Int Cl.:
*G01L 27/00* (2006.01)      *F02D 35/02* (2006.01)
*F02D 41/24* (2006.01)      *F02B 77/08* (2006.01)

(86) Numéro de dépôt international:
**PCT/FR2008/050750**

(87) Numéro de publication internationale:
**WO 2009/004196 (08.01.2009 Gazette 2009/02)**

(54) **PROCEDE DE CALIBRAGE DE L'OFFSET D'UN SIGNAL ISSU D'UN CAPTEUR DE PRESSION DANS UNE CHAMBRE DE COMBUSTION**

VERFAHREN ZUR KALIBRIERUNG DES OFFSETS EINES VON EINEM DRUCKSENSOR IN EINER VERBRENNUNGSKAMMER AUSGEGEBENEN SIGNALS

METHOD FOR CALIBRATING THE OFFSET OF A SIGNAL FROM A PRESSURE SENSOR IN A COMBUSTION CHAMBER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **01.06.2007 FR 0703918**

(43) Date de publication de la demande:
**10.02.2010 Bulletin 2010/06**

(73) Titulaire: **Renault S.A.S.**
**92100 Boulogne-Billancourt (FR)**

(72) Inventeurs:
• **EMERY, Pascal**
  **F-91120 Palaiseau (FR)**
• **NAVARRO, Marcos**
  **F-75014 Paris (FR)**

(74) Mandataire: **Fantin, Teddy**
**Renault s.a.s.**
**TCR GRA 2 36**
**1, avenue du Golf**
**F-78288 Guyancourt Cedex (FR)**

(56) Documents cités:
**FR-A- 2 862 711    FR-A- 2 877 086**

EP 2 150 795 B1

**Description**

La présente invention concerne le domaine des moteurs à combustion interne de type essence ou diesel à injection directe ou indirecte de carburant à n nombre de cylindres et propose en particulier, un procédé de calibrage de l'offset d'un signal issu d'un capteur de pression dans une chambre de combustion.

Les normes européennes antipollution deviennent de plus en plus sévères sur les moteurs d'automobiles. Il est important pour les constructeurs automobiles de bien maîtriser la phase de combustion dans leurs moteurs pour limiter les émissions polluantes sans négliger leur consommation en carburant et leurs performances. Pour ce faire, il est nécessaire de bien connaître cette phase de combustion et ses caractéristiques.

De nombreuses stratégies de contrôle moteur implantées dans le calculateur de contrôle moteur visent au pilotage de la combustion via l'injection. Mais l'injection est tributaire de la qualité des actionneurs utilisés et les dispersions de fabrication des injecteurs et surtout leur dérive au cours du temps sont problématiques. En effet, on observe de grandes dispersions en termes de pollution et de performance d'un moteur à un autre et surtout d'un cylindre à un autre. Lors de la mise au point moteur, des marges importantes sur les réglages sont définies ce qui a pour effet de dégrader les performances globales du moteur.

Pour cela, les constructeurs automobiles avec l'aide de leurs sous-traitants mettent au point des capteurs de pression cylindre fournissant une information riche du fait de leur proximité de la zone de combustion. Cependant, l'information issue de ces capteurs est parfois de mauvaise qualité et peu exploitable.

Actuellement, l'un des problèmes présent sur le signal issu de ces capteurs de pression cylindre est une variation de l'offset du signal, l' « offset » étant défini comme la limite basse de la tension délivrée par le capteur de pression cylindre et varie en fonction du régime et de la charge du moteur. Mais cette variation est gênante pour l'exploitation faite en aval du signal issu du capteur de pression cylindre. En effet, l'utilisation du signal issu du capteur de pression cylindre est effectuée en aval par des algorithmes qui extraient du signal représentatif de la pression des paramètres de combustion. Les paramètres de combustion sont, par exemple, l'angle vilebrequin sous lequel un pourcentage x de la charge dans le cylindre est brûlé (appelé CAx pour Crank Angle où x% est brulé), le début de combustion, la pression maximum, le maximum de la dérivée de la pression, le bruit de combustion, etc. La variation de l'offset empêche complètement, par exemple, l'estimation de la pression maximum ou rend complètement impossible l'utilisation de certains algorithmes d'estimation du bruit de combustion.

Il est connu par le brevet FR 2 862 711 un système de calibrage d'une chaîne d'acquisition de la pression dans un cylindre d'un moteur diesel pour véhicule automobile, du type comportant un capteur de pression cylindre associé au cylindre et des moyens de conditionnement du signal délivré par le capteur en fonction des paramètres de conditionnement. Ce système comprend des moyens de recueil du signal délivré par le capteur de pression cylindre, une unité de traitement d'informations adaptée pour déterminer les valeurs des paramètres de conditionnement en fonction d'un modèle thermodynamique polytropique de l'évolution de la pression dans le cylindre et du signal délivré par le capteur de pression recueilli par les moyens de recueil, et des moyens de modification des valeurs des paramètres de conditionnement dans la chaîne d'acquisition en fonction des -valeurs des paramètres de conditionnement déterminées par l'unité de traitement d'informations. Cependant, un tel système est basé sur une approche thermodynamique coûteuse en temps de calcul nécessitant une solution numérique pour son implantation.

La présente invention a pour but de pallier ces inconvénients de l'art antérieur en proposant un procédé de calibrage de l'offset d'un signal issu d'un capteur de pression dans une chambre de combustion permettant d'améliorer la qualité du signal issu de ce capteur et de le rendre plus exploitable.

Pour atteindre ce but, le procédé de calibrage de l'offset d'un signal représentatif de la pression (P_brut) dans une chambre de combustion d'un moteur à combustion interne à injection directe ou indirecte de carburant, un capteur de pression cylindre étant disposé dans la chambre de combustion à proximité d'un conduit d'échappement et relié à une unité de calibrage comprenant un moyen d'acquisition du signal de pression issu du capteur de pression cylindre, des moyens de traitement de ce signal représentatif de la pression et issu du capteur de pression cylindre et une mémoire est caractérisé en qu'il comprend :

- une étape d'acquisition et de mémorisation du signal de pression (P_brut) issu du capteur de pression cylindre ;
- une première étape de traitement du signal de pression (P_brut) en un signal filtré de pression (P_filt) et une étape de mémorisation du signal filtré de pression (P_filt) ;
- une seconde étape de traitement du signal de pression (P_brut) pour obtenir un signal filtré de la valeur absolue de la dérivée du signal de pression (IP_brutl_filt) et une étape de mémorisation de ce signal (IP'_brutl-filt) ;
- et une troisième étape de traitement pour obtenir un signal de pression dont l'offset est corrigé (P_corr).

Selon, une autre particularité, le signal de pression dont l'offset est corrigé (P_corr) est déterminé selon la relation :

$$P\_corr = P\_brut - A*P\_filt + B*|P'\_brut|\_filt$$

où A et B sont des constantes à calibrer.

Selon une autre particularité, la seconde étape de traitement du signal de pression (P_brut) comprend une première étape de calcul de la dérivée du signal de pression (P'_brut), une seconde étape de calcul de la valeur absolue (IP'_brutI) de la dérivée du signal de pression, et une étape de filtrage de la valeur absolue (IP'_brutI_filt) de la dérivée du signal de pression.

Selon une autre particularité, la première étape de traitement consiste en un filtrage du signal de pression (P_brut) pour obtenir un signal filtré (P_filt).

Selon une autre particularité, les étapes de filtrage sont réalisées au moyen d'un circuit électronique du type filtre linéaire passe bas dont la fréquence de coupure est inférieure à 10 Hz.

Selon une autre particularité, le procédé de calibrage est réalisable soit de manière analogique au moyen de circuits électroniques ou soit de manière numérique.

Selon une autre particularité, le signal de pression dont l'offset est corrigé (P_corr) est déterminé selon une relation variante :

$$P\_corr = P\_brut - A*P\_filt + B*|P'\_brut|\_filt + P\_offs$$

où A et B sont des constantes à calibrer et la valeur constante de la pression (P_offs) représente la possibilité d'ajouter un offset au signal de pression (P_brut).

Un autre but est atteint en proposant un système de détermination de l'offset d'un signal de pression (P_brut) permettant la mise en oeuvre du procédé de calibrage caractérisé en ce que le système comporte un capteur de pression cylindre relié à une unité de calibrage comportant des moyens de traitement pour acquérir, via un moyen d'acquisition, et mémoriser, via une mémoire, un signal représentatif de la pression (P_brut) issu de ce capteur de pression cylindre, et un programme exécuté par les moyens de traitement pour obtenir d'une part un signal filtré (P_filt) et d'autre part, un signal filtré de la valeur absolue de la dérivée du signal de pression (IP'_brutI-filt) et calculer le signal de pression dont l'offset est corrigé (P_corr).

L'invention propose également une utilisation du signal de pression dont l'offset est corrigé (P_corr) caractérisée en ce qu'elle permet de déterminer les paramètres de combustion.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :

- la figure 1 illustre le dispositif permettant la mise en oeuvre du procédé selon l'invention ;
- la figure 2 représente un organigramme du procédé selon l'invention ;
- la figure 3 illustre un exemple de réalisation du procédé selon l'invention : la figure 3a représentant un signal de pression issu du capteur de pression cylindre et un signal après la première étape de traitement, la figure 3b représentant les différents signaux obtenus lors de la seconde étape de traitement et la figure 3c représentant un signal de pression avec correction de l'offset.

Le procédé selon l'invention permet de recaler l'offset d'un signal représentatif de la pression dans une chambre de combustion (2) d'un moteur à combustion interne de type essence ou diesel à injection directe ou indirecte de carburant à n nombre de cylindres.

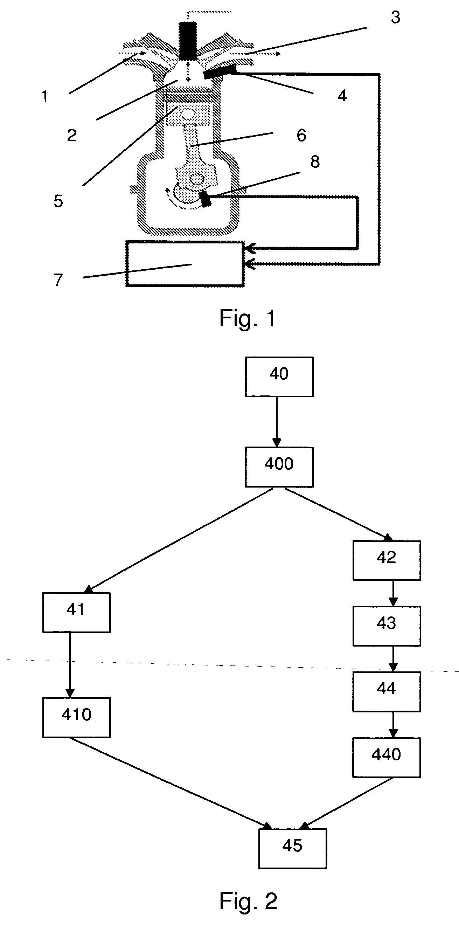

En référence à la figure 1, un tel moteur comprend un conduit d'admission (1) dans lequel se déplace un flux d'admission selon une direction parallèle à l'axe de symétrie du conduit d'admission (1), ce flux d'admission entrant dans la chambre de combustion (2) de façon à être compressé et détendu par le mouvement rectiligne d'un piston (5), ce mouvement rectiligne se transformant en rotation par l'intermédiaire d'une bielle (6), en dessous de laquelle est disposée un capteur (8) d'angle vilebrequin relié à une unité de calibrage (7). Le flux ainsi détendu est chassé vers l'échappement par un conduit d'échappement (3) en se déplaçant selon une direction parallèle à l'axe de symétrie du conduit d'échappement (3). Un capteur (4) de pression cylindre est disposé dans la chambre de combustion (2) à proximité du conduit d'échappement (3) de façon à ce que l'information issue de ce capteur (4) de pression cylindre soit prise au plus près de la zone de combustion. Ce capteur de pression cylindre (4) est relié à l'unité de calibrage (7) comportant un moyen d'acquisition d'un signal représentatif de la pression (P_brut) issu du capteur (4) de pression cylindre, des moyens de traitement de ce signal de pression (P_brut) et une mémoire. Un programme exécuté par les moyens de traitement permet d'obtenir d'une part un signal filtré (P_filt) et d'autre part, un signal filtré de la valeur absolue de la dérivée du signal de pression (IP'_brutl_filt) et de calculer le signal de pression dont l'offset est corrigé (P_corr).

Le procédé de calibrage de l'offset d'un signal brut représentatif de la pression (P_brut) dans une chambre de combustion (2) est basé sur un principe de filtrage « basse fréquence » du signal de pression et de sa dérivée temporelle et est réalisable soit de manière numérique ou soit de manière analogique au moyen de circuits électroniques. Il est à noter que la mise en oeuvre du procédé de manière analogique est une solution peu coûteuse et simple à mettre en oeuvre.

En référence à la figure 2, ce procédé comprend une étape d'acquisition (40) du signal de pression (P_brut) issu du capteur (4) de pression cylindre par le moyen d'acquisition de l'unité de calibrage (7). Ce signal de pression (P_brut) est ensuite mémorisé lors d'une étape de mémorisation (400) dans la mémoire de l'unité de calibrage (7).

Le procédé comprend ensuite une première étape de traitement (41) du signal de pression (P_brut). Cette étape de traitement (41) consiste à réaliser un filtrage du signal de pression (P_brut) afin d'obtenir un signal filtré (P_filt). Le filtrage est réalisé au moyen d'un circuit électronique du type filtre linéaire passe bas dont la fréquence de coupure est « basse » c'est à dire inférieure à 10 Hz. Le signal filtré (P_filt) est ensuite mémorisé lors d'une étape de mémorisation (410) dans la mémoire de l'unité de calibrage (7).

Une seconde étape de traitement du signal de pression (P_brut) est nécessaire pour obtenir un signal filtré de la valeur absolue de la dérivée du signal de pression (IP'_brutl-filt). Cette étape de traitement comprend une première étape de calcul (42) de la dérivée (P'_brut) du signal de pression, une seconde étape de calcul (43) de la valeur absolue (IP'_brutl) de la dérivée (P'_brut) du signal de pression calculée lors de la première étape de calcul (42), et une étape de filtrage (44) de la valeur absolue (IP'_brutl) de la dérivée (P'_brut) du signal de pression calculée lors de la seconde étape de calcul (43). Cette étape de filtrage (44) est également réalisée au moyen d'un circuit électronique du type filtre linéaire passe bas dont la fréquence de coupure est « basse » c'est à dire inférieure à 10 Hz, cette fréquence de coupure étant proche de la fréquence de coupure utilisée lors de la première étape de traitement (41). Le signal filtré de la valeur absolue de la dérivée du signal de pression (IP'_brutl_filt) est ensuite mémorisé lors d'une étape de mémorisation (440) dans la mémoire de l'unité de calibrage (7).

Et, une troisième étape de traitement (45) permet d'obtenir un signal de pression dont l'offset est corrigé (P_corr). L'obtention d'un tel signal est réalisée selon la relation :

$$P\_corr = P\_brut - A*P\_filt + B*|P'\_brut|\_filt$$

où A et B sont des constantes à calibrer qui servent à donner plus ou moins de poids à l'action du terme « A*P_filt » par rapport à celle du terme « B*|P'_brut|_filt ». Dans l'exemple de réalisation de l'invention, la constante A est égale à 1 et la constante B est égale à 15. « P_brut » est le signal de pression de l'étape d'acquisition (40), « P_filt » est le signal résultant de la première étape de traitement (41) et IP'_brutl_filt est le signal résultant de la seconde étape de traitement.

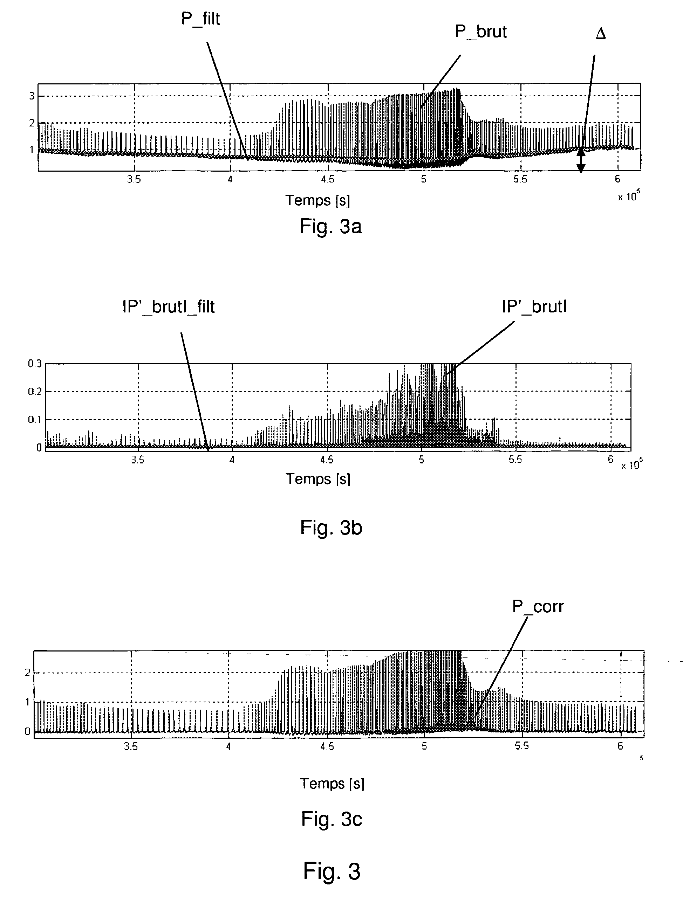

On décrira ci-après un exemple de réalisation du procédé selon l'invention qui vient d'être décrit. La figure 3 représente les différents signaux obtenus après les différentes étapes de traitement (41, 42, 43, 44, 45). La tension en volts est notée en ordonnée et le temps en secondes en abscisse.

La figure 3a représente d'une part, le signal de pression (P_brut) issu du capteur (4) de pression cylindre et d'autre part, le signal filtré (P_filt) obtenue après la première étape de traitement (41). Ces signaux sont représentés en fonction du temps en secondes. Dans cette situation, la variation (Δ) de l'offset représenté par la limite entre la courbe du signal filtré (P_filt) et le zéro de la tension est relativement importante en fonction du temps. Il faut en conclure que la première étape de traitement (41) ne permet pas à elle seule de corriger l'offset du signal de pression (P_brut) issu du capteur (4) de pression cylindre.

La figure 3b représente d'une part, le signal de la valeur absolue (IP'_brutl) de la dérivée du signal de pression obtenu lors de la seconde étape de traitement après les deux étapes de calcul (42) et (43) et d'autre part, le signal filtré (IP'_brutl_filt) de la valeur absolue de la dérivée du signal de pression obtenu lors de la seconde étape de traitement. Ces signaux sont représentés en fonction du temps en secondes. Dans cette situation, la variation de l'offset représentée par la limite entre la courbe du signal filtré (IP'_brutl_filt) et le zéro de la tension a diminué par rapport à la variation (Δ) de l'offset représentée à la figure 3a. Il faut en conclure que la seconde étape de traitement permet de diminuer la variation de l'offset du signal de pression (P_brut) issu du capteur (4) de pression.

La figure 3c représente le signal de pression avec offset corrigé obtenue après la troisième étape de traitement (45). La variation de l'offset est dans cette situation négligeable car minime et les signaux sont ainsi de meilleur qualité et beaucoup plus exploitables.

Une variante du procédé selon l'invention qui vient d'être décrit est aussi proposée. En effet, la troisième étape de traitement permettant d'obtenir un signal de pression dont l'offset est corrigé (P_corr) peut être réalisée selon la relation :

$$P\_corr = P\_brut - A*P\_filt + B*|P'\_brut|\_filt + P\_offs$$

où A et B sont des constantes à calibrer qui servent à donner plus ou moins de poids à l'action du terme « A*P_filt » par rapport à celle du terme « B*|P'_brut|-filt ». Dans l'exemple de réalisation de l'invention, la constante A est égale à 1 et la constante B est égale à 15. La valeur de la pression (P_offs) représente la possibilité d'ajouter un offset supplémentaire au signal de pression (P_brut), mais cette offset aura l'avantage d'être constant et paramétrable. « P_brut » est le signal de pression de l'étape d'acquisition (40), « P_filt » est le signal résultant de la première étape de traitement (41) et IP'_brutl_filt est le signal résultant de la seconde étape de traitement. L'étape d'acquisition (40), la première étape de traitement (41) et la seconde étape de traitement (42) restent inchangées par rapport à la description faite ci dessus.

Un des avantages de l'invention est que le procédé de calibrage de l'offset du signal représentatif de la pression dans une chambre de combustion d'un moteur à combustion interne permet d'améliorer la qualité du signal et ainsi de le rendre plus exploitable afin d'en extraire des paramètres de combustion nécessaires à la bonne maîtrise de la phase de combustion d'un tel moteur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de calibrage de l'offset d'un signal représentatif de la pression (P_brut) dans une chambre de combustion (2) d'un moteur à combustion interne à injection directe ou indirecte de carburant, un capteur (4) de pression cylindre étant disposé dans la chambre de combustion (2) à proximité d'un conduit d'échappement (3) et relié à une unité de calibrage (7) comprenant un moyen d'acquisition du signal de pression (P_brut) issu du capteur (4) de pression cylindre, des moyens de traitement de ce signal représentatif de la pression (P_brut) et issu du capteur (4) de pression cylindre et une mémoire comprenant les étapes :

   - une étape d'acquisition (40) et de mémorisation (400) du signal de pression (P_brut) issu du capteur (4) de pression cylindre ;

   **caractérisé par** les étapes suivant :

   - une première étape de traitement (41) du signal de pression (P_brut) en un signal filtré de pression (P_filt) et une étape de mémorisation (410) du signal filtré de pression (P_filt) ;
   - une seconde étape de traitement du signal de pression (P_brut) pour obtenir un signal filtré de la valeur absolue de la dérivée du signal de pression (IP'_brutl_filt) et une étape de mémorisation (440) de ce signal (IP'_brutl_filt) ;
   - et une troisième étape de traitement (45) pour obtenir un signal de pression dont l'offset est corrigé (P_corr) en utilisant des signaux obtenu d'une part durant la première étape et d'autre part durant la seconde étape.

2. Procédé de calibrage selon la revendication 1, dans lequel le signal de pression dont l'offset est corrigé (P_corr) est déterminé selon la relation :

$$P\_corr = P\_brut - A*P\_filt + B*|P'\_brut|\_filt$$

   où A et B sont des constantes à calibrer.

3. Procédé de calibrage selon la revendication 1 ou 2, dans lequel la seconde étape de traitement du signal de pression (P_brut) comprend une première étape de calcul (42) de la dérivée (P'_brut) du signal de pression, une seconde étape de calcul (43) de la valeur absolue (IP'_brutl) de la dérivée du signal de pression, et une étape de filtrage (44) de la valeur absolue (IP'_brutl) de la dérivée du signal de pression.

**4.** Procédé de calibrage selon une des revendications 1 à 3, dans lequel la première étape (41) de traitement consiste en un filtrage du signal de pression (P_brut) pour obtenir un signal filtré (P_filt).

**5.** Procédé de calibrage selon une des revendications 1 à 4, dans lequel les étapes de filtrage (41) et (44) sont réalisées au moyen d'un circuit électronique du type filtre linéaire passe bas dont la fréquence de coupure est inférieure à 10 Hz.

**6.** Procédé de calibrage selon une des revendications 1 à 5, dans lequel le procédé de calibrage est réalisable soit de manière analogique au moyen de circuits électroniques ou soit de manière numérique.

**7.** Procédé de calibrage selon une des revendications 1 à 6, dans lequel le signal de pression dont l'offset est corrigé (P_corr) est déterminé selon une relation variante :

$$P\_corr = P\_brut - A{*}P\_filt + B{*}|P'\_brut|\_filt + P\_offs$$

où A et B sont des constantes à calibrer et la valeur constante de la pression (P_offs) représente la possibilité d'ajouter un offset au signal de pression (P_brut).

**8.** Système de détermination de l'offset d'un signal de pression (P_brut) selon une des revendications 1 à 7, permettant la mise en oeuvre du procédé de calibrage **caractérisé en ce que** le système comporte un capteur (4) de pression cylindre relié à une unité de calibrage (7) comportant des moyens de traitement pour acquérir, via un moyen d'acquisition, et mémoriser, via une mémoire, un signal représentatif de la pression (P_brut) issu de ce capteur (4) de pression cylindre, et un programme exécuté par les moyens de traitement pour obtenir d'une part un signal filtré (P_filt) et d'autre part, un signal filtré de la valeur absolue de la dérivée du signal de pression (IP'_brutl_filt) et calculer le signal de pression dont l'offset est corrigé (P_corr).

**9.** Utilisation du signal de pression dont l'offset est corrigé (P_corr) selon une des revendications 1 à 7 **caractérisée en ce qu'**elle permet de déterminer les paramètres de combustion.

**Patentansprüche**

**1.** Verfahren zur Kalibrierung des Offsets eines Signals, das für den Druck (P_brut) in einer Verbrennungskammer (2) eines Verbrennungsmotors mit direkter oder indirekter Einspritzung von Kraftstoff repräsentativ ist, wobei ein Zylinderdrucksensor (4) in der Verbrennungskammer (2) in der Nähe eines Auspuffrohres (3) angeordnet ist und mit einer Kalibriereinheit (7) verbunden ist, die ein Mittel zur Erfassung des Drucksignals (P_brut) von dem Zylinderdrucksensor (4), Mittel zur Verarbeitung dieses für den Druck (P_brut) repräsentativen Signals von dem Zylinderdrucksensor (4) und einen Speicher aufweist, welches die folgenden Schritte aufweist:

- einen Schritt der Erfassung (40) und Speicherung (400) des Drucksignals (P_brut) von dem Zylinderdrucksensor (4);

**gekennzeichnet durch** die folgenden Schritte:

- einen ersten Schritt der Verarbeitung (41) des Drucksignals (P_brut) zu einem gefilterten Drucksignal (P_filt) und einen Schritt der Speicherung (410) des gefilterten Drucksignals (P_filt);
- einen zweiten Schritt der Verarbeitung des Drucksignals (P_brut), um ein gefiltertes Signal des absoluten Betrags der Ableitung des Drucksignals (|P'_brut|_filt) zu erhalten, und einen Schritt der Speicherung (440) dieses Signals (|P'-brut|_filt);
- und einen dritten Schritt der Verarbeitung (45), um ein Drucksignal zu erhalten, dessen Offset korrigiert ist (P_corr), unter Verwendung der Signale, die einerseits während des ersten Schrittes und andererseits während des zweiten Schrittes erhalten wurden.

**2.** Verfahren zur Kalibrierung nach Anspruch 1, wobei das Drucksignal, dessen Offset korrigiert ist (P_corr), gemäß der Beziehung

$$P\_corr = P\_brut - A*P\_filt + B*|P'\_brut|\_filt$$

bestimmt wird, wobei A und B zu kalibrierende Konstanten sind.

3. Verfahren zur Kalibrierung nach Anspruch 1 oder 2, wobei der zweite Schritt der Verarbeitung des Drucksignals (P_brut) einen ersten Schritt der Berechnung (42) der Ableitung (P'_brut) des Drucksignals, einen zweiten Schritt der Berechnung (43) des absoluten Betrags (|P'_brut|) der Ableitung des Drucksignals und einen Schritt der Filterung (44) des absoluten Betrags (|P'_brut|) der Ableitung des Drucksignals aufweist.

4. Verfahren zur Kalibrierung nach einem der Ansprüche 1 bis 3, wobei der erste Schritt (41) der Verarbeitung in einer Filterung des Drucksignals (P_brut) besteht, um ein gefiltertes Signal (P_filt) zu erhalten.

5. Verfahren zur Kalibrierung nach einem der Ansprüche 1 bis 4, wobei die Filterungsschritte (41) und (44) mittels einer elektronischen Schaltung vom Typ eines linearen Tiefpassfilters realisiert werden, dessen Grenzfrequenz niedriger als 10 Hz ist.

6. Verfahren zur Kalibrierung nach einem der Ansprüche 1 bis 5, wobei das Verfahren zur Kalibrierung entweder auf analoge Weise mittels elektronischer Schaltungen oder auf digitale Weise realisierbar ist.

7. Verfahren zur Kalibrierung nach einem der Ansprüche 1 bis 6, wobei das Drucksignal, dessen Offset korrigiert ist (P_corr), gemäß einer abgewandelten Beziehung

$$P\_corr = P\_brut - A*P\_filt + B*|P'\_brut|\_filt + P\_offs$$

bestimmt wird, wobei A und B zu kalibrierende Konstanten sind und der konstante Wert des Drucks (P_offs) die Möglichkeit repräsentiert, zu dem Drucksignal (P_brut) einen Offset hinzuzufügen.

8. System zur Bestimmung des Offsets eines Drucksignals (P_brut) nach einem der Ansprüche 1 bis 7, welches die Durchführung des Verfahrens zur Kalibrierung ermöglicht, **dadurch gekennzeichnet, dass** das System einen Zylinderdrucksensor (4) aufweist, der mit einer Kalibriereinheit (7) verbunden ist, die Mittel zur Verarbeitung aufweist, um ein für den Druck (P_brut) repräsentatives Signal von diesem Zylinderdrucksensor (4) über ein Mittel zur Erfassung zu erfassen und über einen Speicher zu speichern, und ein Programm, das von den Mitteln zur Verarbeitung ausgeführt wird, um einerseits ein gefiltertes Signal (P_filt) und andererseits ein gefiltertes Signal des absoluten Betrags der Ableitung des Drucksignals (|P'_brut|_filt) zu erhalten und das Drucksignal zu berechnen, dessen Offset korrigiert ist (P_corr).

9. Verwendung des Drucksignals, dessen Offset korrigiert ist (P_corr), nach einem der Ansprüche 1 bis 7, **dadurch gekennzeichnet, dass** sie es ermöglicht, die Verbrennungsparameter zu bestimmen.

**Claims**

1. Method for calibrating the offset of a signal representing the pressure (P_brut) in a combustion chamber (2) of an internal combustion engine with direct or indirect injection of fuel, a cylinder-pressure sensor (4) being placed in the combustion chamber (2) close to an exhaust duct (3) and connected to a calibration unit (7) comprising a means for acquiring the pressure signal (P_brut) originating from the cylinder-pressure sensor (4), means for processing this signal representing the pressure (P_brut) and originating from the cylinder-pressure sensor (4) and a memory comprising the steps:

    - an acquisition step (40) and a storage step (400) for acquiring and storing the pressure signal (P_brut) originating from the cylinder-pressure sensor (4);

    **characterized by** the following steps:

- a first step (41) of processing the pressure signal (P_brut) into a filtered pressure signal ((P_filt) and a step (410) of storing the filtered pressure signal (P_filt);
- a second step of processing the pressure signal (P_brut) in order to obtain a filtered signal of the absolute value of the derivative of the pressure signal (IP'_brutl_filt) and a step (440) of storing this signal (IP'_brutl_filt) ;
- and a third processing step (45) in order to obtain a pressure signal of which the offset is corrected (P_corr) by using signals obtained on the one hand during the first step and on the other hand during the second step.

**2.** Calibration method according to Claim 1, in which the pressure signal of which the offset is corrected (P_corr) is determined according to the relation:

$$P\_corr = P\_brut - A*P\_filt + B*|P'\_brut|\_filt$$

where A and B are constants to be calibrated.

**3.** Calibration method according to Claim 1 or 2, in which the second step of processing the pressure signal (P_brut) comprises a first step (42) of computing the derivative (P'_brut) of the pressure signal, a second step (43) of computing the absolute value (IP'_brutl) of the derivative of the pressure signal, and a step (44) of filtering the absolute value (IP'_brutl) of the derivative of the pressure signal.

**4.** Calibration method according to one of Claims 1 to 3, in which the first processing step (41) consists in a filtering of the pressure signal (P_brut) in order to obtain a filtered signal (P_filt).

**5.** Calibration method according to one of Claims 1 to 4, in which the filtering steps (41) and (44) are carried out by means of an electronic circuit of the low-pass linear filter type of which the cut-off frequency is below 10 Hz.

**6.** Calibration method according to one of Claims 1 to 5, in which the calibration method can be carried out either in an analogue manner by means of electronic circuits or in a digital manner.

**7.** Calibration method according to one of Claims 1 to 6, in which the pressure signal of which the offset is corrected (P_corr) is determined according to a variant relation:

$$P\_corr = P\_brut - A*P\_filt + B*|P'\_brut|\_filt + P\_offs$$

where A and B are constants to be calibrated and the constant value of the pressure (P_offs) represents the possibility of adding an offset to the pressure signal (P_brut).

**8.** System for determining the offset of a pressure signal (P_brut) according to one of Claims 1 to 7, making it possible to apply the calibration method **characterized in that** the system comprises a cylinder-pressure sensor (4) connected to a calibration unit (7) comprising processing means for acquiring, via an acquisition means, and storing, via a memory, a signal (P_brut) representing the pressure originating from the cylinder-pressure sensor (4), and a program executed by the processing means in order to obtain on the one hand a filtered signal (P_filt) and, on the other hand, a filtered signal of the absolute value of the derivative of the pressure signal (IP'_brutl_filt) and to compute the pressure signal (P_corr) of which the offset is corrected.

**9.** Use of the pressure signal (P_corr) of which the offset is corrected according to one of Claims 1 to 7, **characterized in that** it makes it possible to determine the combustion parameters.

Fig. 1

Fig. 2

Fig. 3a

Fig. 3b

Fig. 3c

Fig. 3

**RÉFÉRENCES CITÉES DANS LA DESCRIPTION**

**Documents brevets cités dans la description**

- FR 2862711